# EUROPÄISCHE PATENTSCHRIFT

(11) **EP 3 921 551 B1**
(45) Veröffentlichungstag und Bekanntmachung des Hinweises auf die Patenterteilung: **04.12.2024**
(21) Anmeldenummer: 20705009.7
(22) Anmeldetag: 05.02.2020
(51) Int. Cl.: F15D 1/04

(54) **WINKELSTÜCK ZUM FLUIDKOMMUNIZIERENDEN VERBINDEN VON FLUIDLEITUNGEN EINES FAHRZEUGS**
ANGLE PIECE FLUIDICALLY CONNECTING FLUID LINES OF A VEHICLE
ÉQUERRE DE LIAISON PAR COMMUNICATION FLUIDIQUE DE CONDUITS DE FLUIDE D'UN VÉHICULE

(30) Priorität: 08.02.2019 DE 102019103210
(43) Veröffentlichungstag der Anmeldung: 15.12.2021
(73) Patentinhaber: NORMA Germany GmbH, 63477 Maintal (DE)
(72) Erfinder: KINTEA, Daniel, 60386 Frankfurt am Main (DE); CLASEN, Hannes, 60598 Frankfurt am Main (DE); VON BREITENBACH, Gerrit, 63791 Karlstein (DE); KIRMANN, Jean-luc, 78000 Versailles (FR); SCHNEIDER, David, 64285 Darmstadt (DE); REUTER, Sven, 63755 Alzenau (DE)
(74) Vertreter: Patentanwälte Olbricht Buchhold Keulertz
(86) Internationale Anmeldenummer: PCT/EP2020/052877
(87) Internationale Veröffentlichungsnummer: WO 2020/161190

(56) Entgegenhaltungen:
- WO-A1-2016/001364
- DE-A1- 2 513 113
- DE-B3- 10 360 839
- FR-A5- 2 110 770
- KR-A- 20150 043 129
- US-A- 2 705 973

## Beschreibung

Die Erfindung betrifft ein Winkelstück zum fluidkommunizierenden Verbinden von Fluidleitungen eines Fahrzeugs, wobei das Winkelstück einen Kanalabschnitt zum Ändern einer Strömungsrichtung eines Fluids um einen Änderungswinkel aufweist, wobei eine Eingangsströmungsrichtung des Fluids in das Winkelstück und eine Ausgangsströmungsrichtung des Fluids aus dem Winkelstück Schenkel des Änderungswinkels bilden.

In Fahrzeugen werden Fluide, wie z. B. Öl, Treibstoff oder Kühlwasser, mittels Fluidleitungen an verschiedenen Positionen im Fahrzeug bereitgestellt. Diese Leitungen verlaufen in verschiedenen Richtungen und unterschiedlichen Bauräumen, so dass an einigen Positionen Winkelstücke benötigt werden, um die Fluidleitungen "um die Ecke" zu führen. Die Winkelstücke sind dabei als Schnellverbinder zum Verbinden von Fluidleitungen ausgebildet und verbinden zwei Fluidleitungen in einem bestimmten Winkel, z. B. 90°, miteinander. Diese Winkelstücke können beispielsweise durch Spritzgussverfahren hergestellt werden, bei denen Formkerne den Innenraum des Winkelstücks ausformen, wobei die Winkelstücke relativ kleine Innendurchmesser aufweisen. Die Formkerne werden nach dem Aushärten des spritzgegossenen Materials aus dem Winkelstück herausgezogen. Für jeden Schenkel des Winkelstücks werden dabei eigene Formkerne genutzt, so dass zwischen den Schenkeln des Winkelstücks eine scharfe Kante entsteht. Wenn anstatt der Kante eine Kurve ausgeformt werden sollte, würde dies eine Hinterschneidung für die Formkerne darstellen, die beim Herausziehen der Formkerne zu Beschädigungen an dem Winkelstück führen könnte. Wenn im Betrieb ein Fluid über diese scharfe Kante strömt, entstehen durch die plötzliche Richtungsänderung Verwirbelungen, die einen starken Druckabfall zur Folge haben. Dieser Druckabfall wirkt sich auf das gesamte Fluidsystem des Fahrzeugs aus, in dem das Winkelstück verbaut ist.

Aus WO 2016/001364 A1 ist eine Vorrichtung zur Strömungsumlenkung für eine Strömungsmaschine, insbesondere für einen mehrstufigen Verdichter, wie einem Getriebeturboverdichter bekannt. Die Vorrichtung weist ein erstes und ein zweites rohrförmiges Strömungsumlenkungssegment mit einer ersten bzw. zweiten Strömungseintritts- und einer ersten bzw. zweiten Strömungsaustrittsöffnung sowie einer ersten bzw. zweiten Segmentlängsachse auf. Die erste Strömungsaustrittsöffnung des ersten Strömungsumlenkungssegments ist derart mit der zweiten Strömungseintrittsöffnung des zweiten Strömungsumlenkungssegments verbunden, dass die zweite Segmentlängsachse um einen vorgebbaren Neigungswinkel gegenüber der ersten Segmentlängsachse geneigt ist. Um eine einfache und kostengünstige Vorrichtung zu realisieren, ist vorgesehen, dass das erste und/oder das zweite Strömungsumlenkungssegment entlang ihrer jeweiligen Segmentlängsachse eine erste bzw. zweite Innenquerschnittsveränderung aufweisen/-t.

DE 103 60 839 B3 beschreibt einen Rohrkrümmer zum Verbinden von in einem Winkel zueinander angeordneten Fluidleitungen. Zur Reduzierung des Strömungswiderstandes, des dadurch bedingten Druckverlustes und zur Verringerung des Strömungsgeräusches werden innerhalb des Rohrkrümmers Strömungsleitelemente in Form von Leitplatten vorgesehen.

DE 25 13 113 A1 offenbart ein anderes bekanntes Winkelstück.

Aufgabe der Erfindung ist es daher, ein verbessertes Winkelstück bereitzustellen, wobei das verbesserte Winkelstück einen Druckabfall reduziert.

Diese Aufgabe wir durch ein Winkelstück mit den Merkmalen des Patentanspruchs 1 gelöst. Vorteilhafte Ausgestaltungen des Winkelstücks sind Gegenstand der abhängigen Ansprüche. Mittels der Erfindung wird ein Winkelstück zum Verbinden von Fluidleitungen eines Fahrzeugs bereitgestellt, wobei mindestens ein in das Winkelstück hineinragendes Führungselement die Änderung der Strömungsrichtung unterstützt, die mittels des Winkelstücks bewirkt wird. Das Führungselement bewirkt dabei, dass ein Teil des durch das Winkelstück und über eine in dem Winkelstück angeordnete Kante strömenden Fluids umgelenkt wird, bevor dieser Teil durch Interaktion mit weiteren Teilen des Fluidstroms Wirbel erzeugt, die zu einem Druckabfall in der Strömung führen. Ohne Führungselement würde dieser Teil des strömenden Fluids, wie auch der Rest des strömenden Fluids bis an eine umlenkende Oberfläche des Kanalabschnitts strömen und erst dann abgelenkt werden. Dabei würde der Teil des strömenden Fluids den Weg von bereits abgelenkten Teilen des Fluids kreuzen und Wirbel verursachen. Das Führungselement lenkt den Teil des Fluids dabei um den Änderungswinkel ab, bevor dieser Teil mit anderen bereits abgelenkten Teilen des Fluids Wirbel erzeugt. Damit werden mittels der Erfindung Wirbel in Winkelstücken zum fluidkommunizierenden Verbinden von Fluidleitungen von Fahrzeugen vermindert. Weiter wird damit ein Druckabfall in dem Winkelstück und dem daran angeschlossenen Fluidleitungssystem verringert. Damit kann das Fahrzeugsystem Energie einsparen, da keine zusätzliche Energie für eine Druckerhöhung in dem Fluidleitungssystem aufgewendet muss.

Weiter kann das Winkelstück einen Eingangsabschnitt und einen Ausgangsabschnitt aufweisen, die mittels des Kanalabschnitts fluidkommunizierend verbunden sind, wobei der Kanalabschnitt eine Kante aufweist, die zwischen dem Eingangsabschnitt und dem Ausgangsabschnitt angeordnet ist.

Die Herstellung einer Kante kann mittels Formkernen auf einfache Weise erfolgen, da die Kante im Gegensatz zu einer Kurve keine Hinterschneidungen in Bezug auf die benötigten Formkerne aufweist.

Es kann weiter vorgesehen sein, dass der Kanalabschnitt drei Führungselemente aufweist, wobei eine der drei Führungselemente zwischen den beiden anderen der drei Führungselemente angeordnet ist und mit den beiden anderen der drei Führungselemente jeweils einen Führungskanal definiert.

Mit drei Führungselementen werden drei verschiedene Teile der Strömung des Fluids um den Änderungswinkel abgelenkt. Lediglich ein kleiner Teil des strömenden Fluids strömt bis zu einer umlenkenden Oberfläche des Kanalabschnitts. Eine Kreuzung der Strömungen im Winkelstück wird damit weiter vermieden, so dass die Vermeidung von Wirbeln verbessert ist. Damit wird ebenfalls die Vermeidung eines Druckabfalls weiter verbessert.

Der Änderungswinkel kann zwischen 45° und 135°, vorzugsweise zwischen 60° und 110°, weiter vorzugsweise 90°, betragen.

Weiter kann das mindestens eine Führungselement einen bogenformähnlichen Abschnitt aufweisen, der einen Winkel überstreicht, dessen Betrag dem Änderungswinkel ganz oder größtenteils entspricht.

Die Führungselemente sind erfindungsgemäß an einem Stützring verbunden, der in das Winkelstück eingesetzt und mit ihm verbunden ist. Der Vorteil der Ausgestaltung als separates Bauteil, insbesondere als Stützring ist, dass Materialpaarungen eingesetzt werden können. Die regelmäßig für Winkelstücke verwendeten Polyamide sind hydrolyseanfällig. Durch die Ausgestaltung des Stützrings als separates Bauteil sind Kombinationen mit anderen nicht hydrolyseanfälligen Materialien möglich.

Weiter kann das Verstärkungselement sich in einer weiteren Erstreckungsrichtung entlang der Hauptströmungsrichtung des Fluids in dem Winkelstück erstrecken.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1a, b: schematische Darstellungen eines nicht zur Erfindung gehörenden Winkelstücks,
- Fig. 2a-c: schematische Querschnittsdarstellungen eines nicht zur Erfindung gehörenden Winkelstücks mit beispielhaften Stromlinien,
- Fig. 3a-e: schematische Querschnittsdarstellungen eines Beispiels eines Führungselements, das in einem nicht zur Erfindung gehörenden Winkelstück Anwendung findet,
- Fig. 4: eine schematische Darstellung eines weiteren Beispiels eines Führungselements, das in einem nicht zur Erfindung gehörenden Winkelstück Anwendung findet,
- Fig. 5: eine schematische Darstellung eines weiteren Beispiels eines Führungselements, das in einem nicht zur Erfindung gehörenden Winkelstück Anwendung findet,

- Fig. 6a, b: schematische Darstellungen eines weiteren Beispiels eines Führungselements, das in einem nicht zur Erfindung gehörenden Winkelstück Anwendung findet,

- Fig. 7: eine schematische Darstellung einer Halterung einer Fluidleitung mit einem Führungselements, das in einem nicht zur Erfindung gehörenden Winkelstück Anwendung findet,
- Fig. 8: eine schematische Darstellung einer Halterung eines nicht zur Erfindung gehörenden Winkelstücks mit einem Führungselement, und
- Fig. 9: eine schematische Darstellung von Führungselementen mit mindestens einem Verstärkungselement, die in einem zur Erfindung gehörenden Winkelstück Anwendung finden.

Das Winkelstück zum fluidkommunizierenden Verbinden von Fluidleitungen eines Fahrzeugs im Folgenden mit dem Bezugszeichen 10 bezeichnet.

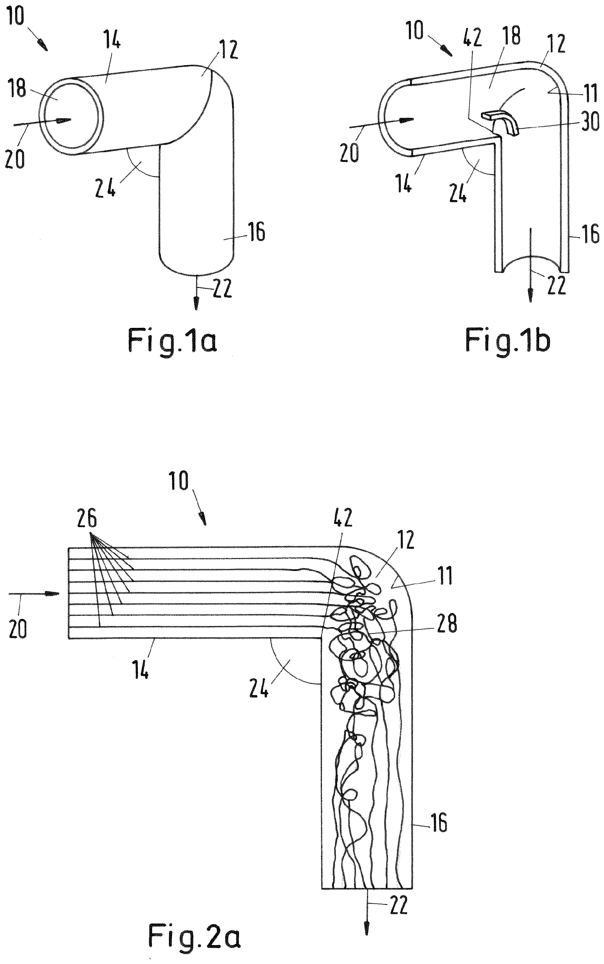

In Figur 1a ist das Winkelstück 10 dargestellt. Das Winkelstück 10 ist als Schnellverbinder für Fluidleitungen eines Fahrzeugs ausgebildet. Die Verbindung mit Fluidleitungen eines Fahrzeugs erfolgt dabei an einem Eingangsabschnitt 14 und an einem Ausgangsabschnitt 16 des Winkelstück 10. Aus den fluidkommunizierend mit dem Winkelstück 10 verbundenen Fluidleitungen wird ein Fluid an dem Eingangsabschnitt 14 in das Winkelstück 10 eingeleitet und an den Ausgangsabschnitt 16 aus dem Winkelstück herausgeführt. Dabei weist das Fluid an dem Eingangsabschnitt 14 eine Eingangsströmungsrichtung 20 auf und an dem Ausgangsabschnitt 16 des Winkelstücks 10 eine Ausgangsströmungsrichtung 22. Die Eingangsströmungsrichtung 20 des Fluids und die Ausgangsströmungsrichtung 22 des Fluids bilden dabei Schenkel eines Änderungswinkels 24, um den die Strömung des Fluids durch das Winkelstück 10 geändert wird. Die Änderung der Strömungsrichtung erfolgt dabei in einem Kanalabschnitt 12 des Winkelstücks 10. Der Änderungswinkel 24 kann dabei zwischen 45° und 135°, vorzugsweise zwischen 60° und 110°, weiter vorzugsweise 90°, betragen.

Figur 1b zeigt einen Längsschnitt durch das Winkelstück 10. Dabei ist zu sehen, dass zwischen dem Eingangsabschnitt 14 und dem Ausgangsabschnitt 16 eine Kante 42 angeordnet ist, die den Eingangsabschnitt 14 mit dem Ausgangsabschnitt 16 verbindet. Die Kante 42 ist dabei in einem Kanalabschnitt 12 des Winkelstücks 10 angeordnet. Der Kanalabschnitt 12 weist eine umlenkende Oberfläche 11 auf, die der Kante 42 gegenüberliegt. An der umlenkenden Oberfläche 11 wird ein Teil der Strömung des Fluids um den Änderungswinkel 24 umgelenkt. Ein anderer Teil der Strömung des Fluids wird an einem Führungselement 30 um den Änderungswinkel 24 umgelenkt, wobei das Führungselement 30 in dem Kanalabschnitt 12 angeordnet ist und in den Kanalabschnitt 12 hineinragt.

Die Figuren 2a bis 2c zeigen die Strömungen in Winkelstücken 10 mit unterschiedlicher Anzahl von Führungselementen 30.

Figur 2a umfasst dabei ein Winkelstück 10, das kein Führungselement 30 aufweist. Innerhalb des Winkelstücks 10 sind Stromlinien 26 des Fluids eingezeichnet, die eine Strömung beginnend bei der Eingangsströmungsrichtung 20 anzeigen. Im Eingangsabschnitt 14 ist die Strömung ungestört und weist keine Turbulenzen bzw. Verwirbelungen auf. Die Strömung strömt über die Kante 42 in den Kanalabschnitt 12 ein wobei es an der Kante 42 zur Grenzschichtablösung kommt und sich ein großes Totwassergebiet ausbildet. Dabei bilden sich Wirbel 28, die sich bis in den Ausgangsabschnitt 16 des Winkelstücks 10 fortpflanzen. Die Wirbel führen zu einem Druckabfall in dem Winkelstück 10 der sich weiter durch die nachfolgenden Fluidleitungen des Fahrzeugs erstreckt.

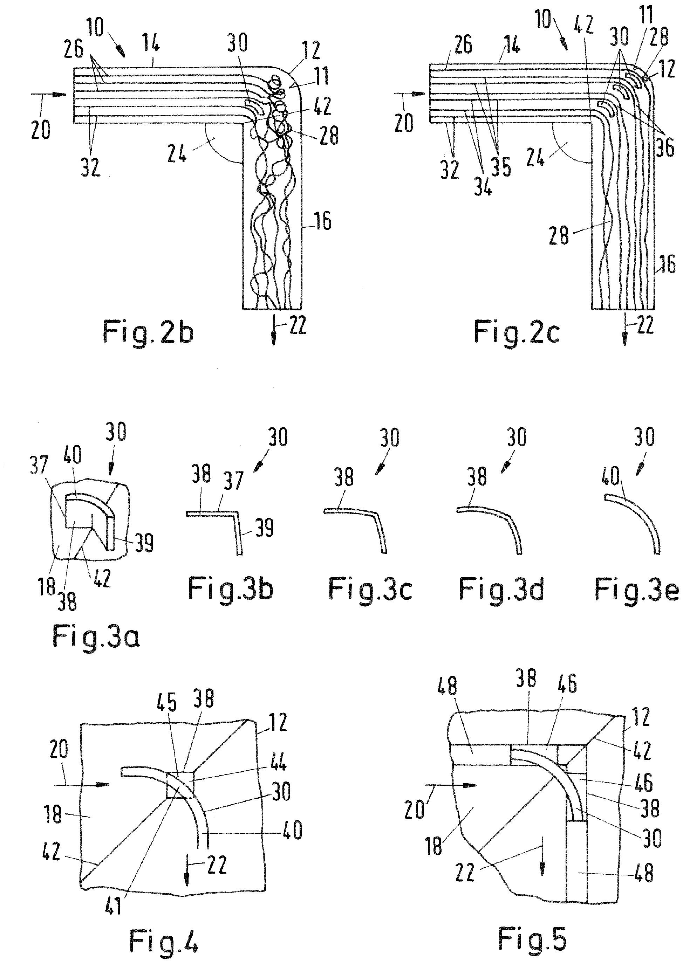

Figur 2b zeigt ein Winkelstück 10, das ein Führungselement 30 aufweist. Ein Teil 32 der Strömung des Fluids wird durch das Führungselement 30 von dem Eingangsabschnitt 14 in den Ausgangsabschnitt 16 umgelenkt. Der verbleibende Teil, der durch die Stromlinien 26 dargestellt ist, trifft dabei auf die umlenkende Oberfläche 11 und wird dort abgelenkt und verwirbelt. Allerdings bilden sich weniger Wirbel 28 als im Vergleich zu dem Winkelstück 10 aus Figur 2a. Der Druckverlust der Ausführungsform aus Figur 2b ist damit kleiner als bei dem Winkelstück 10 aus Figur 2a.

Das Winkelstück 10 aus Figur 2c umfasst drei Führungselemente 30. Die drei Führungselemente 30 sind dabei zwischen der Kante 42 und der umlenkenden Oberfläche 11 so angeordnet, dass eines der Führungselemente 30 zwischen den beiden anderen Führungselementen 30 angeordnet ist. Zwischen dem mittig angeordneten Führungselementen 30 und den beiden äußeren Führungselementen 30 wird jeweils ein Führungskanal 36 gebildet.

Ein Teil 32 der Strömung des Fluids wird dabei zwischen der Kante 42 und einem der Kante 42 am nächsten angeordneten Führungselement 30 von dem Eingangsabschnitt 14 in den Ausgangsabschnitt 16 umgelenkt. Die Teile 34 und 35 der Strömung des Fluids werden durch die beiden Führungskanäle 36 von dem Eingangsabschnitt 14 in den Ausgangsabschnitt 16 um den Änderungswinkel 24 umgelenkt. Der restliche Teil der Strömung, der durch die Stromlinien 26 dargestellt ist, trifft weiter auf die umlenkende Oberfläche 11. Allerdings ist dieser Teil deutlich kleiner als die Summe der Teile 32, 34 und 35 und bildet nur wenige Wirbel 28 aus. Insgesamt bilden sich in dieser Ausführungsform lediglich sehr wenige Wirbel 28, so dass der Druckabfall in dieser Ausführungsform im Vergleich zu den anderen beiden Ausführungsformen aus den Figuren 2a und 2b am geringsten ist.

Die Figuren 3a bis 3e zeigen ein Ausführungsbeispiel eines Führungselements 30. Das Führungselement 30 weist dabei gemäß Figur 3a einen Verbindungsabschnitt 38 und einen bogenformähnlichen Abschnitt 40 auf. Der bogenformähnliche Abschnitt 40 überstreicht dabei einen Winkel ähnlich oder gleich dem Änderungswinkel 24. Weiter ist der bogenformähnliche Abschnitt 40 so angeordnet, dass er eine Strömung aus der Eingangsströmungsrichtung 20 in die Ausgangsströmungsrichtung 22 umlenkt. Der Verbindungsabschnitt 38 verbindet den bogenformähnlichen Abschnitt 40 mit der Innenwand 18 des Kantenabschnitts 12. Der Verbindungsabschnitt 38 weist dabei eine andere Form als der bogenformähnliche Abschnitt 40 auf.

In diesem Ausführungsbeispiel weist der Verbindungsabschnitt 38 an der Innenwand 18 gemäß Figur 3b, die einen Querschnitt durch den Verbindungsabschnitt 38 an der Innenwand 18 zeigt, eine Winkelform mit zwei Schenkelstücken 37, 39 auf. Die Schenkelstücke 37, 39 bilden dabei Schenkel eines Winkels, dessen Betrag dem Änderungswinkel 24 entspricht.

Der Verbindungsabschnitt 38 geht von der Innenwand 18 zum bogenformähnlichen Abschnitt 40 in eine Bogenform über, was durch die Figuren 3c und 3d dargestellt ist. Die Bogenform gemäß Figur 3e erreicht der Verbindungsabschnitt 38 am Übergang zum bogenformähnlichen Abschnitt 40.

Das Führungselement 30 ist dabei am bogenformähnlichen Abschnitt 40 sehr dünn ausgebildet. Dadurch ist der bogenformähnliche Abschnitt 40 zumindest so flexibel, dass er sich bei einem Herausziehen eines Formkerns ohne Beschädigungen elastisch verformen kann. Die Flexibilität des Führungselements 30 ist jedoch nicht so groß, dass es durch eine Luftströmung verformt werden kann. Das Führungselement 30 kann damit mittels eines Formkerns innerhalb des Winkelstücks 10 hergestellt werden, während das Winkelstück 10 hergestellt wird. Dabei sind die Schenkelstücke 37, 39 des Verbindungsabschnitt 38 in Richtung der Eingangsströmungsrichtung 20 und der Ausgangsströmungsrichtung 22 angeordnet, wobei der Formkern nach der Herstellung des Führungselements 30 und des Winkelstücks 10 entlang einer der beiden Richtungen herausgezogen wird. Ein Formkern, der gegen die Eingangsströmungsrichtung 20 herausgezogen wird, stellt dabei eine Form für das Schenkelstück 37 bereit. Ein Formkern der in die Ausgangsströmungsrichtung 22 herausgezogen wird, stellt dabei eine Form für das Schenkelstück 39 bereit.

Da der bogenformähnliche Abschnitt 40 in oben genannte Weise flexibel ausgebildet ist, kann er sich während des Herausziehens des Formkerns verformen und wird dadurch nicht beschädigt. Damit kann das Führungselement 30 auf einfache Weise mittels eines Formkerns innerhalb des Winkelstücks 10 während der Herstellung des Winkelstücks 10 hergestellt werden.

Figur 4 zeigt eine weitere Ausführungsform des Führungselements 30. Der Verbindungsabschnitt 38 verbindet dabei lediglich ein Teilstück 41 des bogenformähnlichen Abschnitts 40 mit der Innenwand 18. Der Verbindungsabschnitt 38 erstreckt sich damit in der Strömungsrichtung lediglich entlang des Teilstücks 41 des bogenformähnlichen Abschnitts 40. Weiter umfasst der Verbindungsabschnitt 38 eine Querschnittsfläche, die aus zwei Teilflächen 44, 45 gebildet wird. Die Teilfläche 45 ist dabei so ausgebildet, dass sie in Eingangsströmungsrichtung 20 keine Hinterschneidungen aufweist. Die Teilfläche 44 ist so ausgebildet, dass sie in Ausgangsströmungsrichtung 22 keine Hinterschneidungen aufweist. Weiter ist der bogenformähnliche Abschnitt 40 auch in dieser Ausführungsform gemäß der oben angeführten Beschreibung flexibel ausgebildet.

Das Teilstück des Verbindungsabschnitts 38, das die Teilfläche 45 umfasst, kann damit mittels eines Formkerns, der entgegen der Eingangsströmungsrichtung 20 aus dem Winkelstück 10 herausgezogen wird, hergestellt werden. Das Teilstück des Verbindungsabschnitts 38, das die Teilfläche 44 umfasst, kann damit mittels eines Formkerns, der in die Ausgangsströmungsrichtung 22 aus dem Winkelstück 10 herausgezogen wird, hergestellt werden. Aufgrund der Flexibilität des bogenformähnlichen Abschnitts 40 verformt sich der bogenformähnliche Abschnitt 40 beim Herausziehen der Formkerne, da der bogenformähnliche Abschnitt 40 eine Hinterschneidung in Bezug auf die Formkerne aufweist. Jedoch wird der bogenformähnliche Abschnitt 40 aufgrund seiner Flexibilität dabei nicht beschädigt.

Figur 5 zeigt eine weitere Ausführungsform des Führungselements 30. In dieser Ausführungsform ist das Führungselement 30 separat von dem Winkelstück 10 hergestellt worden. In die Innenwand 18 des Winkelstücks 10 werden dabei Führungsrinnen 48 hergestellt oder eingebracht. Eine Führungsrinne 48, die sich in Richtung des Eingangsabschnitts 14 erstreckt, ist dabei entlang der Eingangsströmungsrichtung 20 ausgerichtet. Eine Führungsrinne 48, die sich in Richtung des Ausgangsabschnitts 16 erstreckt, ist dabei entlang der Ausgangsströmungsrichtung 22 ausgerichtet.

Das Führungselement 30 weist einen Verbindungsabschnitt 38 auf, der Schienenelemente 46 umfasst, die gleitend in einer Führungsrinne 48 bewegbar sind. Die Schienenelemente 46 können in der Führungsrinne 48 fixiert werden.

Das Führungselement 30 kann damit in das Winkelstück 10 eingebracht werden und mittels der Schienenelemente 46 mit der Führungsrinne 48 verbunden werden. Die Schienenelemente 46 können dann entlang der Führungsrinne 48 bewegt werden, bis das Führungselement 30 an der vorgesehenen Position an dem Kanalabschnitt 12 angeordnet ist. Dann werden die Schienenelemente 46 an der Führungsrinne 48 fixiert.

Durch die separate Herstellung des Führungselements 30 kann das Führungselement 30 aus einem zu dem Winkelstück 10 unterschiedlichen Material hergestellt werden.

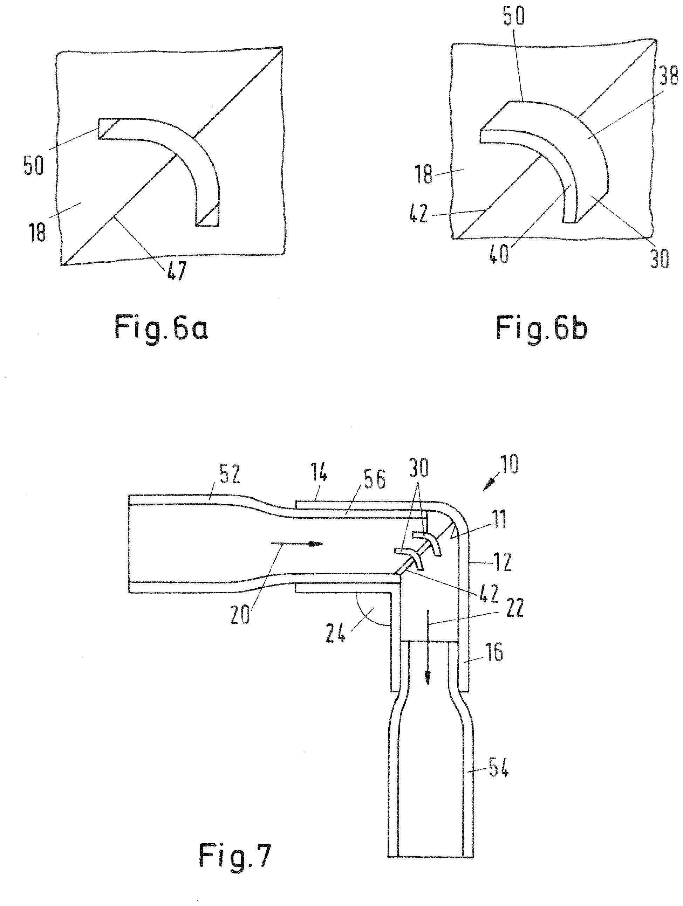

Die Figuren 6a und 6b zeigen eine weitere Ausführungsform des Führungselements 30. Gemäß Figur 6a ein seitlicher Durchbruch 50 in der Innenwand 18 des Kanalabschnitts 12 ausgebildet, durch die der bogenformähnliche Abschnitt 40 des Führungselements 30 von außen in den Kanalabschnitt 12 angeordnet werden kann. Der Verbindungsabschnitt 38 des Führungselements 30 kann dabei mit dem seitlichen Durchbruch 50 verbunden werden. Dabei kann das Führungselement 30 in den Durchbruch 50 eingeschoben werden und z.B. verschweißt oder verklebt werden.

Der Verbindungsabschnitt 38 wird dabei gemäß Figur 6b mit der Innenwand 18 verbunden. Die Verbindung erfolgt an der Position, an der das Führungselement 30 in dem Winkelstück 10 angeordnet werden soll.

Auch dieses Ausführungsbeispiel des Führungselements 30 wird separat zu dem Winkelstück 10 hergestellt und kann aus einem zu dem Winkelstück 10 unterschiedlichen Material bestehen.

In Figur 7 wird eine weitere Ausführungsform des Führungselements 30 beschrieben. Dabei ist das Führungselement 30 an einem Halteelement 56 einer Fluidleitung 52 ausgebildet, das in das Winkelstück 14 eingesteckt wird. Das Halteelement 56 reicht von dem Eingangsabschnitt 14 bis zum Kanalabschnitt 12 des Winkelstücks 10. Das Führungselement 30 ist an einem Ende des Halteelement 56 angeordnet und wird durch das Anordnen des Halteelements 56 in dem Winkelstück 14 in den Kanalabschnitt 12 angeordnet.

Eine weitere Fluidleitung 54 kann an dem Ausgangsabschnitt 16 des Winkelstücks 12 eingefügt werden. Alternativ kann weiter das Führungselement 30 an einem Halteelement 56 angeordnet sein, das über den Ausgangsabschnitt 16 mit dem Winkelstück 12 verbunden wird.

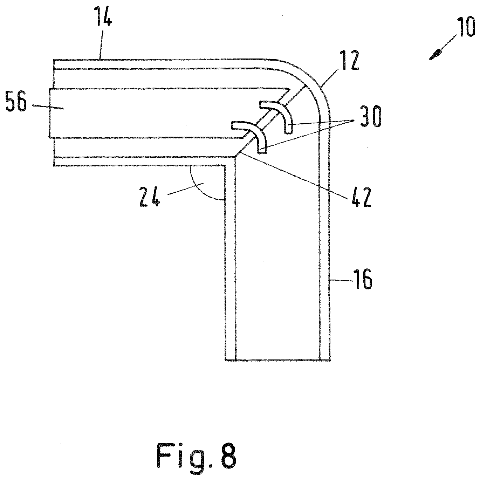

In Figur 8 wird eine weitere Ausführungsform des Führungselements 30 beschrieben. Dabei ist das Führungselement 30 mit einem Halteelement 56 an dem Winkelstück 10 angeordnet. Das Halteelement 56 kann in das Winkelstück 10 eingeschoben werden, um die Führungselemente 30 an den Kanalabschnitt 12 anzuordnen.

Das Halteelement 56 kann dabei sowohl durch den Eingangsabschnitt 14 als auch durch den Ausgangabschnitt 16 in das Winkelstück 10 eingeführt werden.

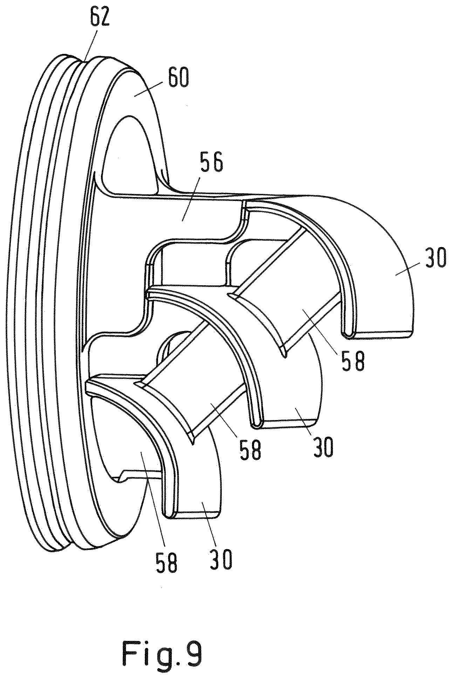

Fig. 9 zeigt ein weiteres Beispiel eines Halteelements 56, das drei Führungselemente 30 aufweist und sich von einem Stützring 60 weg erstreckt. Der Stützring 60 kann in das Winkelstück 10 eingesetzt werden. Dazu weist der Stützring 60 eine Nut 62 auf, die mit einem Hinterschnitt am Winkelstück 10 zur Befestigung verpresst ist. In einer nicht zur Erfindung gehörenden Ausführungsform kann die Verbindung des Stützrings 60 jedoch auch auf andere Weise, z. B. Kleben, Schweißen usw. ausgebildet sein.

In einer nicht zur Erfindung gehörenden alternativen Ausführungsform kann das Verstärkungselement 58 unmittelbar mit dem Winkelstück 10 verbunden sein.

Die Führungselemente 30 werden in diesem Beispiel mit einem Verstärkungselement 58 gestützt. Das Verstärkungselement 58 stützt die Führungselemente 30 dabei an einer Wand des Stützrings 60 ab. Die Führungselemente 30 werden mittels des Verstärkungselements 58 in einer Richtung quer zu ihrer eigenen Erstreckungsrichtung gestützt.

Gemäß einer nicht zur Erfindung gehörenden Ausführungsform stützt das Verstärkungselement 58 die Führungselemente 30 nicht am dem Stützring 60 oder dem Winkelstück 10 ab. Das Verstärkungselement 58 kann die Führungselemente 30 auch lediglich gegeneinander abstützen. Bereits dies bewirkt eine Verbesserung der Stabilität der Führungselemente 30.

Das Verstärkungselement 58 ragt dabei in das von den Führungselementen 30 abgelenkte, strömende Fluid hinein und kann die Führungselemente 30 miteinander verbinden. Wider Erwarten bewirkt das Verstärkungselement 58 dabei eine Reduktion des Druckabfalls in dem Winkelstück 10 anstatt einer Erhöhung des Druckabfalls. Ohne Verstärkungselement 58 kann die Reduktion des Druckabfalls in einem Winkelstück 10 mit einem Winkel von 90° z. B. im Mittel 36 % betragen. Durch das Hinzufügen des Verstärkungselements 58 kann die Reduktion z. B. im Mittel 39 % betragen.

In diesem Beispiel ist das Verstärkungselement 58 als Strebe ausgebildet, die sich in entlang der Hauptrichtung des strömenden Fluids und zwischen den Führungselementen 30 erstreckt, wobei es die Führungselemente 30 verbindet. Das Verstärkungselement 58 ist dabei in diesem Beispiel in der durch die Schenkel des Änderungswinkels 24 aufgespannten Ebene angeordnet und erstreckt sich mit seinen Haupterstreckungsrichtungen in dieser Ebene. Es kann jedoch auch diese Ebene schneidend angeordnet sein.

### Bezugszeichenliste

- 10: Winkelstück
- 11: umlenkende Oberfläche
- 12: Kanalabschnitt
- 14: Eingangsabschnitt
- 16: Ausgangsabschnitt
- 18: Innenwand
- 20: Eingangsströmungsrichtung
- 22: Ausgangsströmungsrichtung
- 24: Änderungswinkel
- 26: Stromlinien
- 28: Wirbel
- 30: Führungselement
- 32: Teil der Strömung
- 34: Teil der Strömung
- 35: Teil der Strömung
- 36: Führungskanal
- 37: Schenkelstück
- 38: Verbindungsabschnitt
- 39: Schenkelstück
- 40: bogenformähnlicher Abschnitt
- 41: Teilstück
- 42: Kante
- 44: Teilfläche
- 45: Teilfläche
- 46: Schienenelement
- 48: Führungsrinne
- 50: seitlicher Durchbruch
- 52: Fluidleitung
- 54: Fluidleitung
- 56: Halteelement
- 58: Verstärkungselement
- 60: Stützring
- 62: Nut

## Patentansprüche

1. Winkelstück zum fluidkommunizierenden Verbinden von Fluidleitungen eines Fahrzeugs, wobei das Winkelstück (10) einen Kanalabschnitt (12) zum Ändern einer Strömungsrichtung eines Fluids um einen Änderungswinkel (24) aufweist, wobei eine Eingangsströmungsrichtung (20) des Fluids in das Winkelstück (10) und eine Ausgangsströmungsrichtung (22) des Fluids aus dem Winkelstück (10) Schenkel des Änderungswinkels (24) bilden, wobei mindestens ein Führungselement (30) in dem Kanalabschnitt (12) angeordnet ist, das in den Kanalabschnitt (12) hineinragt, wobei das mindestens eine Führungselement (30) die Strömungsrichtung eines Teils des Fluids um den Änderungswinkel (24) zumindest größtenteils ändert, wobei das mindestens eine Führungselement (30) an einem Stützring (60) verbunden ist, der in das Winkelstück (10) eingesetzt und mit dem Winkelstück (10) verbunden ist, wobei der Stützring (60) eine Nut (62) aufweist, die mit einem Hinterschnitt am Winkelstück (10) verpresst ist, wobei ein Verstärkungselement (58) eine Strebe ist und das mindestens eine Führungselement (30) an dem Stützring (60) abstützt, wobei sich das Verstärkungselement (58) von dem mindestens einen Führungselement (30) weg erstreckt.

2. Winkelstück nach Anspruch 1, **dadurch gekennzeichnet, dass** das Winkelstück (10) einen Eingangsabschnitt (14) und einen Ausgangsabschnitt (16) aufweist, die mittels des Kanalabschnitts (12) fluidkommunizierend verbunden sind, wobei der Kanalabschnitt (12) eine Kante (42) aufweist, die zwischen dem Eingangsabschnitt (14) und dem Ausgangsabschnitt (16) angeordnet ist.

3. Winkelstück nach Anspruch 1 oder 2, **dadurch gekennzeichnet, dass** der Kanalabschnitt (12) mindestens drei Führungselemente (30) aufweist, wobei eines der drei Führungselemente (30) zwischen den beiden anderen der drei Führungselemente (30) angeordnet ist und mit den beiden anderen der drei Führungselemente (30) jeweils einen Führungskanal (36) definiert.

4. Winkelstück nach einem der Ansprüche 1 bis 3, **dadurch gekennzeichnet, dass** der Änderungswinkel (24) zwischen 45° und 135°, vorzugsweise zwischen 60° und 110°, weiter vorzugsweise 90°, beträgt.

5. Winkelstück nach einem der Ansprüche 1 bis 4, **dadurch gekennzeichnet, dass** das mindestens eine Führungselement (30) einen bogenformähnlichen Abschnitt (40) aufweist, der einen Winkel überstreicht, dessen Betrag dem Änderungswinkel (24) ganz oder größtenteils entspricht.

6. Winkelstück nach einem der Ansprüche 1 bis 5, **dadurch gekennzeichnet, dass** das mindestens eine Führungselement (30) an einem Halteelement (56) befestigt ist, wobei das Halteelement (56) sich von dem Stützring (60) weg erstreckt.

## Claims

1. Elbow for fluid-communicating connection of fluid lines of a vehicle, wherein the elbow (10) has a channel section (12) for changing a flow direction of a fluid by a change angle (24), wherein an inlet flow direction (20) of the fluid into the elbow (10) and an outlet flow direction (22) of the fluid from the elbow (10) form legs of the change angle (24), wherein at least one guide element (30) is arranged in the channel section (12) and projects into the channel section (12), wherein the at least one guide element (30) at least largely changes the flow direction of one part of the fluid by the change angle (24), wherein the at least one guide element (30) is connected at a support ring (60), which is inserted into the elbow (10) and connected to the elbow (10), wherein the support ring (60) has a groove (62) which is press-fitted with an undercut at the elbow (10), wherein a reinforcement element (58) is a strut and supports the at least one guide element (30) against the support ring (60), wherein the reinforcement element (58) extends away from the at least one guide element (30).

2. Elbow according to Claim 1, **characterized in that** the elbow (10) has an inlet section (14) and an outlet section (16) which are connected in fluid communication via the channel section (12), wherein the channel section (12) has an edge (42) which is arranged between the inlet section (14) and the outlet section (16).

3. Elbow according to Claim 1 or 2, **characterized in that** the channel section (12) has at least three guide elements (30), wherein one of the three guide elements (30) is arranged between the two other guide elements of the three guide elements (30) and, with the two other guide elements of the three guide elements (30), in each case defines a guide channel (36) .

4. Elbow according to one of Claims 1 to 3, **characterized in that** the change angle (24) is between 45° and 135°, preferably between 60° and 110°, more preferably 90°.

5. Elbow according to one of Claims 1 to 4, **characterized in that** the at least one guide element (30) has a section (40) which is similar in shape to an arc and which covers an angle whose magnitude corresponds completely or largely to the change angle (24).

6. Elbow according to one of Claims 1 to 5, **characterized in that** the at least one guide element (30) is fastened to a holding element (56), wherein the holding element (56) extends away from the support ring (60).

## Revendications

1. Pièce d'angle pour la liaison par communication fluidique de conduits de fluide d'un véhicule, la pièce d'angle (10) présentant une section de canal (12) pour modifier une direction d'écoulement d'un fluide d'un angle de modification (24), une direction d'écoulement d'entrée (20) du fluide dans la pièce d'angle (10) et une direction d'écoulement de sortie (22) du fluide hors de la pièce d'angle (10) forment des branches de l'angle de modification (24), au moins un élément de guidage (30) étant agencé dans la section de canal (12), qui fait saillie dans la section de canal (12), l'au moins un élément de guidage (30) modifiant la direction d'écoulement d'une partie du fluide de l'angle de modification (24) au moins en majeure partie, l'au moins un élément de guidage (30) étant relié à une bague de support (60) qui est insérée dans la pièce d'angle (10) et reliée à la pièce d'angle (10), la bague de support (60) présentant une rainure (62) qui est comprimée avec une contre-dépouille sur la pièce d'angle (10), un élément de renforcement (58) étant une entretoise et supportant l'au moins un élément de guidage (30) sur la bague de support (60), l'élément de renforcement (58) s'étendant à partir de l'au moins un élément de guidage (30) .

2. Pièce d'angle selon la revendication 1, **caractérisée en ce que** la pièce d'angle (10) présente une section d'entrée (14) et une section de sortie (16) qui sont reliées par communication fluidique au moyen de la section de canal (12), la section de canal (12) présentant un bord (42) qui est agencé entre la section d'entrée (14) et la section de sortie (16).

3. Pièce d'angle selon la revendication 1 ou 2, **caractérisée en ce que** la section de canal (12) présente au moins trois éléments de guidage (30), l'un des trois éléments de guidage (30) étant agencé entre les deux autres des trois éléments de guidage (30) et définissant avec les deux autres des trois éléments de guidage (30) respectivement un canal de guidage (36).

4. Pièce d'angle selon l'une quelconque des revendications 1 à 3, **caractérisée en ce que** l'angle de modification (24) est compris entre 45° et 135°, de préférence entre 60° et 110°, de préférence encore 90°.

5. Pièce d'angle selon l'une quelconque des revendications 1 à 4, **caractérisée en ce que** l'au moins un élément de guidage (30) présente une section de forme semblable à un arc (40) qui couvre un angle dont la valeur correspond en totalité ou en majeure partie à l'angle de modification (24).

6. Pièce d'angle selon l'une quelconque des revendications 1 à 5, **caractérisée en ce que** l'au moins un élément de guidage (30) est fixé à un élément de soutien (56), l'élément de soutien (56) s'étendant à partir de la bague de support (60).
